(19) Europäisches Patentamt

European Patent Office

Office européen des brevets

(11) **EP 1 577 790 A2**

(12) **EUROPEAN PATENT APPLICATION**

(43) Date of publication:
**21.09.2005 Bulletin 2005/38**

(51) Int Cl.7: **G06F 17/14**, H04N 7/26

(21) Application number: **05251662.2**

(22) Date of filing: **18.03.2005**

| | |
|---|---|
| (84) Designated Contracting States:<br>**AT BE BG CH CY CZ DE DK EE ES FI FR GB GR<br>HU IE IS IT LI LT LU MC NL PL PT RO SE SI SK TR**<br>Designated Extension States:<br>**AL BA HR LV MK YU**<br><br>(30) Priority: **18.03.2004 CN 200410012857<br>05.03.2005 KR 2005018437**<br><br>(71) Applicants:<br>• **SAMSUNG ELECTRONICS CO., LTD.<br>Gyeonggi-do (KR)**<br>• **Huazhong University of Science and Technology<br>Hubei Province (CN)** | (72) Inventors:<br>• **Guangxi, Zhu c/o Huazhong University of S. & T.<br>Wuhan City, Hubei Province (CN)**<br>• **Xiaohua, Tian c/o Huazhong University of S. & T.<br>Wuhan City, Hubei Province (CN)**<br>• **Yao, Wang c/o Huazhong University of S. & T.<br>Wuhan City, Hubei Province (CN)**<br>• **Wenyu, Liu c/o Huazhong University of S. & T.<br>Wuhan City, Hubei Province (CN)**<br>• **Li, Yu c/o Huazhong University of S. & T.<br>Wuhan City, Hubei Province (CN)**<br><br>(74) Representative: **Waddington, Richard et al<br>Appleyard Lees,<br>15 Clare Road<br>Halifax HX1 2HY (GB)** |

(54) **Integer transform matrix selection method in video coding and related integer transform matrix**

(57) An integer transform method for image data compression in a video codec is provided. In compliance with the first Audio and Video Coding Standard (AVS) of China in which 8x8 DCT integer transform is adopted, an integer transform base selection method, which is used to evaluate the quality of transform bases with both decorrelation efficiency and energy concentration efficiency, is provided. Computation complexity is also considered in the selection procedure. Based on the method, two groups of 8x8 transform bases (5, 6, 4, 1) and (4, 5, 3, 1) are selected and a fast transform algorithm for these two groups is provided.

FIG. 1

**Description**

This invention relates to an image processing technology, and more particularly, to integer transform of image data compression in a video codec. The present invention includes a method for selecting a transform base (transform matrix) of integer transform and a method for implementing block transform based on selection of the transform base.

In current international video coding standards, such as H.264 and MPEG-4, video signals are hierarchically divided into sequences, frames, slices, macro blocks, and blocks, and the block is the minimum processing unit. At the encoding side, through intra-frame or inter-frame prediction, the prediction residual error of a block is obtained and a block transform is performed so that energy is concentrated on a small number of coefficients. Then, through quantization, scanning, run length coding and entropy coding, image data is compressed and recorded as a coded bitstream. At the decoding side, the procedure is reversed. First, the block transform coefficients of entropy coding are extracted from the bitstream. Then, through inverse quantization and inverse transform, the prediction residual error of a block is reconstructed, and prediction information is used to reconstruct the video data of a block. In the encoding-decoding procedure, the transform module is the basis of video compression and the transform performance directly affects the general performance of a codec.

Discrete Cosine Transform (DCT) was adopted in the early video coding standards such as MPEG-1 and H. 261. Since the proposal of the DCT in 1974, the DCT has been widely used in the filed of image and video coding. Since the DCT eliminates correlation of image elements in the transform domain and lays the foundation for high efficiency image compression, DCT's transform performance is excellent among all sub-optimal transforms. However, since a DCT transform matrix is expressed with floating point numbers, a lot of system resources are consumed due to the large amount of floating point computations. In order to improve the transform efficiency, approaches using fixed point computations or large-scale integer transforms have been developed to replace the floating point computation DCTs. However, because of the appearance of precision errors, even without quantization, image data cannot be completely reconstructed after the inverse transform. That is, the reversibility of coding is not sufficient. Integer transform solves the problems of computation accuracy and coding efficiency. The characteristics of the integer transform include that the floating point transform matrix of the DCT is replaced with an integer transform matrix such that integer operations are performed in the entire transform process, no precision error is present, and therefore the reversibility of coding is ensured. Furthermore, multiplication of integers can be replaced with additions and/or subtractions and shifting operations.

Accordingly, since the transform process can be implemented completely by additions and/or subtractions and shifting operations, the amount of computation is greatly reduced. The integer transform is used in the latest international video coding standard H.264/MPEG-4 Part 10, and excellent transform results are obtained. In recent years, research conducted on integer transforms has been substantial in the image and video processing fields. Relevant patents obtained on integer transforms are as follows.

1. U.S. Patent No. 5,999,957, entitled "Lossless Transform System For Digital Signals" discloses a fixed value is multiplied by each row of a DCT transform matrix, the result of each multiplication is rounded, and the coefficients of the transform matrix are converted into integers in order to implement reversible transforms. However, this derivation procedure of the transform matrix without consideration of transform orthogonality cannot guarantee that the integer transform is orthogonal. Accordingly, the transform efficiency is affected. Furthermore, the computation becomes complicated with a plurality of multiplications and/or divisions performed in the quantization process. In addition, a plurality of multiplications in the fast transform algorithm affect the transform efficiency.

2. WO01/08001A1, entitled "Integer Cosine Transform Using Integer Operations".

3. U.S. Patent No. 20020111979A1, entitled "Integer Transform Matrix For Picture Coding", discloses a method for evaluating the transform efficiency of an integer transform matrix which is provided mainly through comparison of its similarity with DCT. The method guarantees the orthogonality of the transform. According to the patent, the theoretically best matrices were proposed under the three conditions of 4x4, 8x8 and 16x16. However, the effect of the computation complexity on the transform performance is not considered in the method. Furthermore, in order to ensure the same vector norm of each line or row of the matrix, the selected transform matrices are not the closest to the DCT in transform efficiency.

4. U.S. Patent No. 2003/0093452A1, entitled "Video Block Transform", discloses matrices of the integer transform and the inverse transform in orthogonal and non-orthogonal forms a 4x4 block based on H.261, and the transform matrix of macroblock DC coefficients and the quantized step length corresponding to the orthogonal transform are provided in this patent. The size of the transform matrix according to the patent is different from that of the present invention. Furthermore, the small sized transform matrix of the patent is not suitable for applications such as high definition television (HDTV).

An 8x8 DCT can be expressed as the following equation 1:

$$Y(u,v) = \frac{1}{4} C(u)C(v) \sum_{j=0}^{7} \sum_{k=0}^{7} X(j,k) \cos(\pi u \frac{2j+1}{16}) \cos(\pi v \frac{2k+1}{16}) \ldots\ldots (1)$$

Here, $C(0)=1/\sqrt{2}$ , and C(w)=1 (w=1,...,7) . The equation is expressed in the form of matrix as $Y = P_0 X P_0^T$ , in which X denotes the 8x8 pixel prediction residual error matrix and
Y denotes the transformed matrix.

$$P_0 = \begin{bmatrix} a & a & a & a & a & a & a & a \\ b & d & e & g & -g & -e & -d & -b \\ c & f & -f & -c & -c & -f & f & c \\ d & -g & -b & -e & e & b & g & -d \\ a & -a & -a & a & a & -a & -a & a \\ e & -b & g & d & -d & -g & b & -e \\ f & -c & c & -f & -f & c & -c & f \\ g & -e & d & -b & b & -d & e & -g \end{bmatrix}$$

Here ,

$$a = \frac{1}{2\sqrt{2}} \quad b = \frac{1}{2}\cos(\frac{\pi}{16}) \quad c = \frac{1}{2}\cos(\frac{2\pi}{16}) \quad d = \frac{1}{2}\cos(\frac{3\pi}{16})$$

$$e = \frac{1}{2}\cos(\frac{5\pi}{16}) \quad f = \frac{1}{2}\cos(\frac{6\pi}{16}) \quad g = \frac{1}{2}\cos(\frac{7\pi}{16})$$

According to the modifying procedure for the 4x4 DCT transform by the international standard H.264, the 8x8 transform can be rewritten as follows. A common coefficient is extracted from each row of the matrix in order to obtain vector $V_8$ = [a, m, f, m, a, m, f, m], wherein m is the common coefficient extracted from the even numbered row of matrix $P_0$ and is a positive value not greater than k4. Then, the transform matrix is rewritten as the following:

$$P_1 = \begin{bmatrix} 1 & 1 & 1 & 1 & 1 & 1 & 1 & 1 \\ k1 & k2 & k3 & k4 & -k4 & -k3 & -k2 & -k1 \\ k5 & 1 & -1 & -k5 & -k5 & -1 & 1 & k5 \\ k2 & -k4 & -k1 & -k3 & k3 & k1 & k4 & -k2 \\ 1 & -1 & -1 & 1 & 1 & -1 & -1 & 1 \\ k3 & -k1 & k4 & k2 & -k2 & -k4 & k1 & -k3 \\ 1 & -k5 & k5 & -1 & -1 & k5 & -k5 & 1 \\ k4 & -k3 & k2 & -k1 & k1 & -k2 & k3 & -k4 \end{bmatrix}, \; \texttt{wherein,} \quad \begin{array}{l} k1 = b/m \\ k2 = d/m \\ k3 = e/m \\ k4 = g/m \\ k5 = c/f \end{array}.$$

Defining matrix $E_8 = V_8^T V_8$, an 8x8 matrix, the above transform can be expressed as the following equation 2:

$$Y = P_1 X P_1^T \otimes E_8 \qquad (2)$$

Here, $\otimes$ indicates a cross multiplication operation, that is, corresponding elements of the matrices are multiplied. In case of expression 2, the $\otimes$ operation with matrix $E_8$ can be performed together with the quantization operation in order to simplify the transform. Accordingly, the core of the transform resides in the calculation of $P_1 X P_1^T$, wherein X is the 8x8 pixel prediction residual error matrix having integers. If the variables k1, k2, k3, k5 of $P_1$ are integers, the entire transform can be converted into integer operations. Accordingly, the remaining work is to determine the selection of the five parameters k1 , k2 , k3 , k4 , and k5. Through a large number of experiments according to the present invention, the transform performance proved to be the best when the value of k5 is set to 2 after k1, k2, k3, and k4 are selected. A similar conclusion was drawn in the article, 'Development of Integer Cosine Transform by the Principle of Dyadic Symmetry' (Cham, IEEE Proceedings, 1989, 136 (4): pp 276-288). Accordingly, k5 is set to a fixed value of 2 in the present invention, and only the selection of the remaining four parameters is studied. (k1, k2 , k3 , k4) are defined as the transform base. The corresponding transform matrix P is:

$$P = \begin{pmatrix} 1 & 1 & 1 & 1 & 1 & 1 & 1 & 1 \\ k1 & k2 & k3 & k4 & -k4 & -k3 & -k2 & -k1 \\ 2 & 1 & -1 & -2 & -2 & -1 & 1 & 2 \\ k2 & -k4 & -k1 & -k3 & k3 & k1 & k4 & -k2 \\ 1 & -1 & -1 & 1 & 1 & -1 & -1 & 1 \\ k3 & -k1 & k4 & k2 & -k2 & -k4 & k1 & -k3 \\ 1 & -2 & 2 & -1 & -1 & 2 & -2 & 1 \\ k4 & -k3 & k2 & -k1 & k1 & -k2 & k3 & -k4 \end{pmatrix}$$

According to an aspect of the present invention there is provided an integer transform matrix selection method in video coding and a related integer transform method. In consideration of the first Audio and Video Coding Standard of China (AVS) to be established in which the 8x8 integer DCT transform is adopted, a method for selecting a transform base of integer transform is provided. Here, the de-correlation efficiency, energy concentration efficiency of the transform base, the dynamic transform range of the transform base, and the computation complexity are evaluated. Furthermore, two groups of 8x8 integer transform bases (5, 6, 4, 1) and (4, 5, 3, 1) are proposed according to this method, and a fast transform algorithm based on the two groups of bases is also provided.

[01] Selection of a transform base is based on the following principles.

Principle 1: Transform orthogonality. Orthogonal transform ensures that the transform is merely a rotation of the coordinate system but the energy of the image remains unchanged. In order to ensure the orthogonality of the transform, P in the equation 2 should satisfy the following equation 3:

$$P \cdot P^T = Diag \tag{3}$$

Here, *Diag* is a diagonal matrix, that is, its non-leading-diagonal elements are zeros. Then, the quantization procedure satisfies transform orthogonality through adjustment of the quantization matrix.

Principle 2: Energy concentration. The object of DCT transform is to eliminate the correlation among elements to concentrate as much energy after the transform as possible in a small number of coefficients, so that the compression efficiency of entropy coding after quantization is improved. Selection of an integer transform base is also performed with this principle.

Principle 3: Simplicity of a fast transform algorithm. It is required that the values of a transform base are not too large, and the number of computations is as few as possible.

According to an aspect of the present invention, there is provided an integer transform matrix selection method in video coding, comprising: first searching for all the integer transform bases satisfying an orthogonal condition in a predetermined range, wherein the transform base is defined as (k1, k2, k3, k4) for an 8x8 transform matrix P,

$$P = \begin{pmatrix} 1 & 1 & 1 & 1 & 1 & 1 & 1 & 1 \\ k1 & k2 & k3 & k4 & -k4 & -k3 & -k2 & -k1 \\ 2 & 1 & -1 & -2 & -2 & -1 & 1 & 2 \\ k2 & -k4 & -k1 & -k3 & k3 & k1 & k4 & -k2 \\ 1 & -1 & -1 & 1 & 1 & -1 & -1 & 1 \\ k3 & -k1 & k4 & k2 & -k2 & -k4 & k1 & -k3 \\ 1 & -2 & 2 & -1 & -1 & 2 & -2 & 1 \\ k4 & -k3 & k2 & -k1 & k1 & -k2 & k3 & -k4 \end{pmatrix}$$

where the value ranges of transform base coefficients k1, k2, k3, k4 are k1, k2, k3 $\in$ [1,10] and k4 $\in$ [1,4] and all the integer orthogonal transform bases satisfying $P \cdot P^T = Diag$ are obtained in which *Diag* is a diagonal matrix;

establishing covariance matrix COV($X_v$) of input image residual error data when the values of the correlation coefficient $\rho$ are at 0.75, 0.8, 0.85, 0.9, and 0.95, assuming that the one dimensional image prediction residual error vector with the length of 8 is $X_v = [ x_1, x_2, ...x_8 ]$, the covariance matrix COV($X_v$) of element $X_v$ established based on a first order Markov model is COV $(X_v)_{(i,j)} = \rho^{|i-j|}$ ($0 \leq i$, $j \leq 7$) , in which $\rho$ is the correlation coefficient between adjacent $X_v$ elements, and $\rho \leq 1$;

obtaining covariance matrix COV($Y_v$) of a transform domain through the transform matrix P corresponding to the transform bases, wherein transform matrix P to which the transform base (k1 k2 , k3 , k4) corresponds is normalized, that is, each row of P is divided by the vector length of that row, in order to obtain the orthogonal matrix $P_u$, and $X_v$ is orthogonally transformed as $Y_v = P_u X_v$ and the covariance matrix of $Y_v$ is:

$$COV(Y_v) = P_u \cdot COV(X_v) \cdot P_u^T ;$$

through the establishing of covariance matrix COV($X_v$) and the obtaining of covariance matrix COV($Y_v$), calculating the energy concentration efficiency $\eta_E$ and de-correlation efficiency $\eta_c$ when values of the correlation coefficient $\rho$ are at 0.75, 0.8, 0.85, 0.9, and 0.95, wherein the energy concentration efficiency $\eta_E$ is defined as:

$$\eta_E = \frac{1}{\sqrt[8]{\prod_{i=1}^{8} COV(Y_v)_{(i,i)}}}$$

and de-correlation efficiency $\eta_c$ as :

$$\eta_c = 1 - \frac{\sum_{j \neq k} |COV(Y_v)_{(j,k)}|}{\sum_{j \neq k} |COV(X_v)_{(j,k)}|} ;$$

calculating the normalized results of energy concentration efficiency $\eta_E$ and de-correlation efficiency $\eta_c$ for each transform base at a predetermined correlation coefficient $\rho$, wherein the normalized result of $\eta_E$ for the i-th transform base at the identical $\rho$ is:

$$Eval_{E(i)} = \frac{\eta_{E(i)} - Min(\eta_{E(j)})}{Max(\eta_{E(j)}) - Min(\eta_{E(j)})}$$

and the normalized result of $\eta_c$ for the ith transform base is:

$$Eval_{c(i)} = \frac{\eta_{c(i)} - Min(\eta_{c(j)})}{Max(\eta_{c(j)}) - Min(\eta_{c(j)})};$$

calculating the weighted sum in order to obtain the compositive evaluation values $Eval_E$, and $Eval_c$ of the energy concentration efficiency $\eta_E$ and the de-correlation efficiency $\eta_c$ for every group of bases at each correlation coefficient $\rho$, wherein the weights that the five $\rho$ points correspond to are 1/15, 2/15, 3/15, 4/15, and 5/15, respectively; and calculating the weighted sum of $Eval_c$ and $Eval_E$ in order to obtain the compositive evaluation value for transform base performance Eval, wherein the weights of $Eval_c$ and $Eval_E$ are 0.4 and 0.6 respectively.

The method may further comprise after obtaining the compositive evaluation value for the performance of transform bases Eval: evaluating the computation complexity for transform base (k1, k2 , k3 , k4) , wherein first the transform bases with higher compositive evaluation values Eval are selected; and if the difference among Eval values is less than 0.02, the bases that provide more advantages in computation complexity, that is, bases that require fewer addition/subtractions and fewer shifting operations, are preferred for applications that require better real-time performance.

According to another aspect of the present invention, there is provided an integer transform method in video coding, wherein at the encoding side, through intra-frame or inter-frame, the prediction residual error of a block is obtained and prediction and block transform is performed so that energy is concentrated on a handful of coefficients; then through quantization, scanning, run length coding, and entropy coding, the image data are compressed and written to the coding bit stream; at the decoding side, the block transform coefficients of entropy coding are extracted from the bit stream, then through inverse quantization and inverse transform, the prediction residual error of a block is reconstructed, which along with prediction information is used to reconstruct the video data, the method comprising:

obtaining the transform matrix P used in an 8x8 integer transform in video coding through an integer transform matrix selection method in video coding, as the following expression:

$$P = \begin{pmatrix} 1 & 1 & 1 & 1 & 1 & 1 & 1 & 1 \\ 4 & 5 & 3 & 1 & -1 & -3 & -5 & -4 \\ 2 & 1 & -1 & -2 & -2 & -1 & 1 & 2 \\ 5 & -1 & -4 & -3 & 3 & 4 & 1 & -5 \\ 1 & -1 & -1 & 1 & 1 & -1 & -1 & 1 \\ 3 & -4 & 1 & 5 & -5 & -1 & 4 & -3 \\ 1 & -2 & 2 & -1 & -1 & 2 & -2 & 1 \\ 1 & -3 & 5 & -4 & 4 & -5 & 3 & -1 \end{pmatrix}$$

wherein the corresponding integer transform base is (5, 6, 4, 1) ;
performing an integer transform on an 8x8 image residual error data block, expressed as $Y = PXP^T$, wherein the basic transform unit is an 8-point one dimensional transform, expressed as $y=Px$, where $x=[x0,x1,x2,x3,x4,x5,x6,x7]^T$ and the output vector $y=[y0,y1,y2,y3,y4,y5,y6,y7]^T$, and the calculation operations include:

A. a0=x0-x7, a1=x1-x6, a2=x2-x5, a3=x3-x4, a4=x0+x7, a5=x1+x6, a6=x2+x5, a7=x3+x4;
B. b0=a4+a7, b1=a5+a6, b2=a4-a7, b3=a5-a6;
C. y0=b0+b1, y4=b0-b1, y2=b2<<1+b3, y6=b2-b3<<1; and then, a calculation expressed as the following equation is performed:

$$\begin{pmatrix} y1 \\ y3 \\ y5 \\ y7 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} a0 \\ a1 \\ a2 \\ a3 \end{pmatrix},$$

D . c0=a0<<2+a0+a3; c1=a2-a1-a1<<2; c2=a1+a2+a2<<2; c3=a3<<2+a3-a0;

E . y1=c0-c1+c2; y3=c0-c2-c3; y5=c0+c1+c3; y7=c1+c2-c3;

performing one dimensional inverse transform by defining the basic unit of one dimensional transform as $x=P^Ty$, in which, $y =[y0,y1,y2,y3,y4,y5,y6,y7]^T$, $x =[x0,x1,x2,x3,x4,x5,x6,x7]^T$, wherein performing the one dimensional inverse transform includes:

A . m0=y0+y4; m1=y0-y4; m2=y2<<1+y6; m3=y2-y6<<1;

B.b0=m0+m2; b1=m1+m3; b2=m1-m3; b3=m0-m2;

C.calculating the 4x4 matrix multiplication expressed as the following equation:

$$\begin{pmatrix} a0 \\ a1 \\ a2 \\ a3 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} y1 \\ y3 \\ y5 \\ y7 \end{pmatrix}$$

where the calculation procedure is the same as that of the 4x4 matrix multiplication in the transform and only the input and output vectors are exchanged;

D. x0=a0+b0; x1=a1+b1; x2=a2+b2; x3=a3+b3;

x7=-a0+b0; x6=-a1+b1; x5=-a2+b2; x4=-a3+b3;

where "<<" indicates a left shifting operation, and has a priority higher than that of an addition/subtraction operation, that is, "a<<b" means that a is left shifted by b bits.

According to still another aspect of the present invention, there is provided an integer transform method in video coding, wherein at the encoding side, through intra-frame or inter-frame, the prediction residual error of a block is obtained and prediction and block transform is performed so that energy is concentrated on a handful of coefficients; then through quantization, scanning, run length coding, and entropy coding, the image data are compressed and written to the coding bit stream; at the decoding side, the block transform coefficients of entropy coding are extracted from the bit stream, then through inverse quantization and inverse transform, the prediction residual error of a block is reconstructed, which along with prediction information is used to reconstruct the video data, the method comprising:

obtaining the transform matrix P used in an 8x8 integer transform in video coding through an integer transform matrix selection method in video coding, as the following expression:

$$P = \begin{pmatrix} 1 & 1 & 1 & 1 & 1 & 1 & 1 & 1 \\ 4 & 5 & 3 & 1 & -1 & -3 & -5 & -4 \\ 2 & 1 & -1 & -2 & -2 & -1 & 1 & 2 \\ 5 & -1 & -4 & -3 & 3 & 4 & 1 & -5 \\ 1 & -1 & -1 & 1 & 1 & -1 & -1 & 1 \\ 3 & -4 & 1 & 5 & -5 & -1 & 4 & -3 \\ 1 & -2 & 2 & -1 & -1 & 2 & -2 & 1 \\ 1 & -3 & 5 & -4 & 4 & -5 & 3 & -1 \end{pmatrix}$$

wherein the corresponding integer transform base is (4, 5, 3, 1);
performing an integer transform on an 8x8 image residual error data block, expressed as $Y = PXP^T$, wherein the basic transform unit is an 8-point one dimensional transform, expressed as $y=Px$, where $x = [x0,x1,x2,x3,x4,x5,x6,x7]^T$ and the output vector $y = [y0,y1,y2,y3,y4,y5,y6,y7]^T$, and the calculation operations includes:

A. a0=x0-x7, a1=x1-x6, a2=x2-x5, a3=x3-x4, a4=x0+x7, a5=x1+x6, a6=x2+x5, a7=x3+x4;
B. b0=a4+a7, b1=a5+a6, b2=a4-a7, b3=a5-a6;
C. y0=b0+b1, y4=b0-b1, y2=b2<<1+b3, y6=b2-b3<<1; and then, a calculation expressed as the following equation is performed:

$$\begin{pmatrix} y1 \\ y3 \\ y5 \\ y7 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} a0 \\ a1 \\ a2 \\ a3 \end{pmatrix},$$

D . c0=a0<<2+a3; c1=a2-a1<<2; c2=a1+a2<<2; c3=a3<<2-a0;
E . y1=c0-c1+c2; y3=c0-c2-c3; y5=c0+c1+c3; y7=c1+c2-c3;

performing one dimensional inverse transform by defining the basic unit of one dimensional transform as $x=P^Ty$, in which, $y = [y0,y1,y2,y3,y4,y5,y6,y7]^T$, $x = [x0,x1,x2,x3,x4,x5,x6,x7]^T$, wherein performing the one dimensional inverse transform includes:

A . m0=y0+y4; m1=y0-y4; m2=y2<<1+y6; m3=y2-y6<<1;

B. b0=m0+m2; b1=m1+m3; b2=m1-m3; b3=m0-m2;

C.calculating the 4x4 matrix multiplication expressed as the following equation:

$$\begin{pmatrix} a0 \\ a1 \\ a2 \\ a3 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} y1 \\ y3 \\ y5 \\ y7 \end{pmatrix},$$

where the calculation procedure is the same as that of the 4x4 matrix multiplication in the transform and only the input and output vectors are exchanged;

D.x0=a0+b0; x1=a1+b1; x2=a2+b2; x3=a3+b3;

x7=-a0+b0; x6=-a1+b1; x5=-a2+b2; x4=-a3+b3;

where "<<" indicates a left shifting operation, and has a priority higher than that of an addition/subtraction operation, that is, "a<<b" means that a is left shifted by b bits.

According to the present invention, a compositive evaluation method for the performance of an integer transform base is provided. Several groups of transform bases with better performances are selected based on this method, and a fast transform method for two groups of transform bases is provided. Test results of high-definition video testing sequences prove that the performance of the groups of preferred transform bases according to the present invention is superior to that of the adaptive block transform (ABT) 8x8 transform of JVT, wherein base (10, 9, 6, 2) shows the best transform performance, (4, 5, 3,1) provides the lowest computation complexity, and the performance of (5, 6, 4, 1) is between the two. Compared with the ABT 8x8 transform, the above three groups of bases have advantages in both transform performance and computation complexity. Furthermore, the tested performance of the selected transform bases proves the accuracy and feasibility of the transform base selection method according to the present invention. The method is suitable not only for integer transform matrices, but also for performance evaluation of a variety of transform matrices, including great significance for the selection of transform matrices.

For a better understanding of the invention, and to show how embodiments of the same may be carried into effect, reference will now be made, by way of example, to the accompanying diagrammatic drawings in which:

FIG. 1 is a flowchart of a transform base evaluation procedure according to an exemplary embodiment of the present invention;
FIG. 2 illustrates a fast transform algorithm of a transform with transform base (5, 6, 4, 1);
FIG. 3 illustrates a fast transform algorithm of an inverse transform with transform base (5, 6, 4, 1);
FIG. 4 illustrates a fast transform algorithm of a transform with transform base (4, 5, 3, 1); and
FIG. 5 illustrates a fast transform algorithm of an inverse transform with transform base (4, 5, 3, 1).

(1) Selection of a transform base

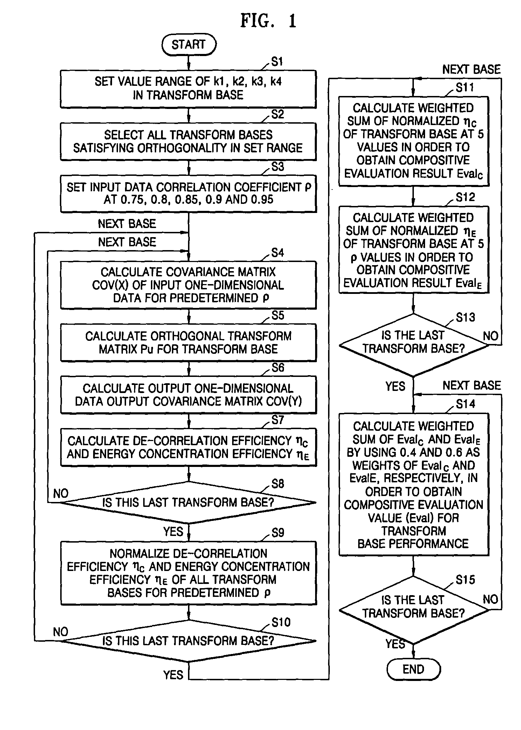

The evaluation procedure of transform bases according to an exemplary embodiment of the present invention is shown in FIG. 1.

The values of the correlation coefficient ($p$) of a variety of image residual error data are mainly distributed between 0.75 and 0.95. The energy concentration efficiency ($\eta_E$) values to which each transform base at the $\rho$ values of 0.75, 0.8, 0.85, 0.9, and 0.95 corresponds are calculated. The $\eta_E$ values of the various transform bases at identical $\rho$ are normalized. The weighted sum of the normalized results of $\eta_E$ corresponding to an identical transform base at different correlation coefficient $\rho$ values is calculated to obtain the compositive evaluation value (Eval$_E$) of energy concentration efficiency $\eta_E$ corresponding to the group of bases, wherein the weight is determined by the probability of different $\rho$ values. According to the present invention, the weight values corresponding to the five $\rho$ points are set to 1/15, 2/15, 3/15, 4/15, and 5/15, successively. The compositive evaluation value (Eval$_c$) of the de-correlation efficiency $\eta_c$ corresponding to a group of transform bases can be calculated with the same procedure.

Finally, the compositive evaluation value (Eval) of energy concentration efficiency $\eta_E$ to which the transform base corresponds, and de-correlation efficiency $\eta_c$ can be obtained by calculating the weighted sum of Eval$_E$ and Eval$_c$. Because the energy concentration efficiency directly affects the compression performance after transform, its weight is greater. The weights of the evaluation values (Eval$_E$ and Eval$_c$) are defined as 0.6 and 0.4, respectively, according to the exemplary embodiment of the present invention.

When the values of Eval are close, the bases with lower computation complexity perform better.

The following table 1 shows the compositive evaluation value of $\eta_E$ and $\eta_c$ to which the five groups of bases correspond, and the number of additions and the number of shifting operations required to complete an 8-point one dimensional transform when the ranges of transform bases are k1, k2, k3$\in$ [1,10] and k4$\in$ [1,4] (the number of operations for the transform and that for the inverse transform are the same):

Table 1

| k1, k2, k3, k4 | *Compositive Evaluation* | Number of Additions | Number of Shifting |
|---|---|---|---|
| | *Value of $\eta_E$ and $\eta_c$* | +/- | Operations << |
| 10,9,6,2 | 0.9859 | 36 | 10 |
| 5,6,4,1 | 0.8579 | 32 | 6 |
| 6,6,3,2 | 0.8441 | 36 | 10 |
| 6,7,5,1 | 0.8409 | 32 | 10 |
| 4,5,3,1 | 0.8249 | 28 | 6 |

(10 , 9 , 6 , 2) and (6 , 6 , 3 , 2) have been proposed in related articles. The compositive evaluation value of the de-correlation efficiency and energy concentration efficiency corresponding to base (5 , 6 , 9 , 1) is next to that corresponding to base (10 , 9 , 6,2), and the computation complexity is lower. The compositive evaluation value corresponding to base (4 , 5 , 3 , 1) is slightly lower than that corresponding to base (6 , 6 , 3 , 2) , but its advantage in computation complexity is apparent. Actual video sequence tests show that the distortion rate performance provided by bases (5 , 6 , 4 , 1), (4 , 5, 3, 1), and (6, 7, 5, 1) is better than that by (6 , 6 , 3 , 2) , and is the closest to the performance by base (10 , 9 , 6 , 2) .

(2) Implementation of the 8x8 integer transform fast algorithm

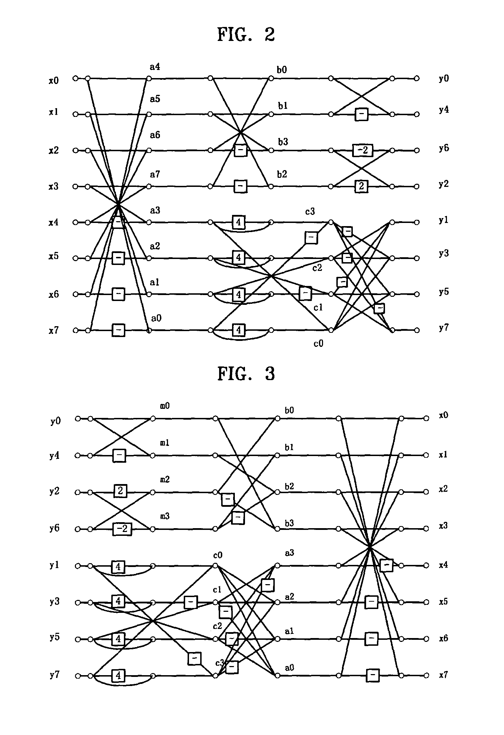

With reference to FIGS. 2 through 5, x0, x1, x2, x3, x4, x5, x6, and x7 indicate the eight input values of a one dimensional transform of the integer transform, and at the same time are the eight output values of the inverse transform; and y0, y1, y2, y3, y4, y5, y6, and y7 are the eight output values of a one dimensional transform and at the same time are the eight input values of the inverse transform. The direction of data processing is from the left to the right. Two lines intersecting at a dot indicate an addition of two numbers, and three lines intersecting at one dot indicate addition of three numbers. A square indicates a multiplication by a coefficient, wherein, "-" indicates a negation, "2" indicates a multiplication by 2, i.e. left shifting by one bit; "4" indicates a multiplication by 4, i.e., left shifting by two bits.

1. Transform

An integer transform is performed on an 8x8 image residual error data block, wherein the basic transform unit is an 8-point one dimensional transform like y =Px, assuming x=[x0,x1,x2,x3,x4,x5,x6,x7]$^T$ and the output y= [y0,y1,y2,y3,y4,y5,y6,y7]$^T$. The calculation procedure is as follows.
First, when the transform is performed with different transform matrices P, the common operations are as follows:

(1) a0=x0-x7,a1=x1-x6,a2=x2-x5,a3=x3-x4,a4=x0+x7,a5=x1+x6,a6=x2+x5, a7=x3+x4;
(2) b0=a4+a7,b1=a5+a6,b2=a4-a7,b3=a5-a6;
(3) y0=b0+b1,y4=b0-b1,y2=b2<<1+b3,y6=b2-b3<<1.

Here, the same part of the calculation requires 16 additions/subtractions and two shifting operations. Then, the individual operations are performed, which are equivalent to calculating with the following equation:

$$
\begin{pmatrix} y1 \\ y3 \\ y5 \\ y7 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} a0 \\ a1 \\ a2 \\ a3 \end{pmatrix},
$$

The calculation operations corresponding to base (5, 6, 4, 1) are:

(1) c0=a0<<2+a0+a3;c1=a2-a1-a1<<2; c2=a1+a2+a2<<2; c3=a3<<2+a3-a0;
(2) y1=c0-c1+c2;y3=c0-c2-c3;y5=c0+c1+c3;y7=c1+c2-c3; Here, a total of 16 additions/subtractions and four shifting operations are required.

The calculation operations for base (4, 5, 3, 1) are:

(1) c0=a0<<2+a3; c1=a2-a1<<2; c2=a1+a2<<2; c3=a3<<2-a0;
(2) y1=c0-c1+c2;y3=c0-c2-c3;y5=c0+c1+c3;y7=c1+c2-c3; Here, a total of 12 additions/subtractions and 4 shifting operations are required.

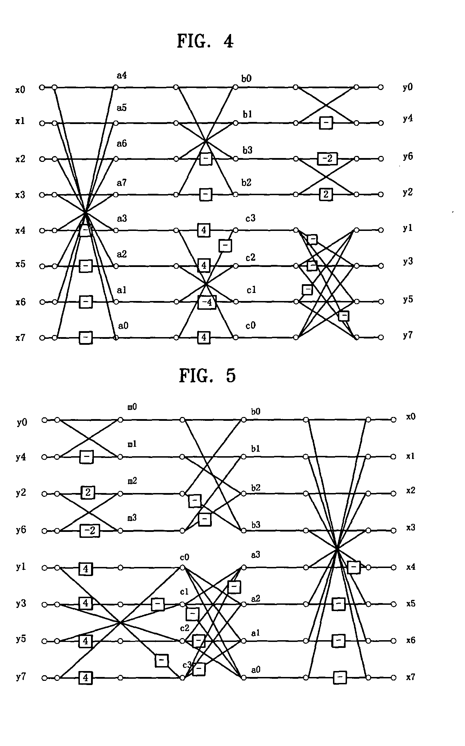

Accordingly, in order to complete one time of y=Px, a total of 32 additions/subtractions and six shifting operations are required for transform base (5 , 6, 4 , 1) , and 28 additions/subtractions and six shifting operations are required for transform base (4, 5, 3, 1). The amount of computation required to complete one time of integer transform to an 8x8 block is 16 times the amount of unit calculation described above. The fast algorithm of transform for base (5, 6, 4, 1) is illustrated in Figure 2. The fast algorithm of transform for base (4, 5, 3, 1) is illustrated in Figure 4.

2. Inverse transform

The basic one dimensional transform unit is defined as $x=P^Ty$, in which, $y =[y0,y1,y2,y3,y4,y5,y6,y7]^T$, $x = [x0,x1,x2,x3,x4,x5,x6,x7]^T$. The following operations are for one time of $x=P^Ty$ calculation.

(1) m0=y0+y4;m1=y0-y4;m2=y2<<1+y6;m3=y2-y6<<1;
(2) b0=m0+m2;b1=m1+m3;b2=m1-m3;b3=m0-m2;
(3) calculating the 4x4 matrix multiplication using the following equation:

$$\begin{pmatrix} a0 \\ a1 \\ a2 \\ a3 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} y1 \\ y3 \\ y5 \\ y7 \end{pmatrix}$$

In the calculation formula and transform, the matrix multiplication and the algorithm are the same, and only the input and output data vectors are exchanged. Computation amounts of the two expressions are the same. For base (5, 6, 4, 1), 16 additions/subtractions and four shifting operations are required; and for base (4, 5, 3, 1), 12 additions/subtractions and four shifting operations are required.
(4) x0=a0+b0; x1=a1+b1; x2=a2+b2; x3=a3+b3;
x7=-a0+b0; x6=-a1+b1; x5=-a2+b2; x4=-a3+b3;

Here, the "<<"operation indicates a left shifting operation, and has a priority higher than that of the addition/subtraction operation. The expression "a<<b" indicates that a is left shifted by b bits. The computation amount of the common parts is 16 additions/subtractions and two shifting operations.
Accordingly, in order to complete one-time of $x=P^Ty$ , 32 additions/subtractions and six shifting operations are required for base (5 , 6 , 4 , 1) , and 28 additions/subtractions and six shifting operations are required for base (4, 5, 3, 1). The fast algorithm of inverse transform for base (5, 6, 4, 1) is illustrated in Figure 3. The fast algorithm of inverse transform for base (4, 5, 3, 1) is illustrated in Figure 5. The amount of computation required to complete the inverse transform of one time of integer transform to an 8x8 block is 16 times the amount of the unit calculation described above.
According to the present invention, a compositive evaluation method for the performance of an integer transform base is provided. Several groups of transform bases with better performances are selected based on this method, and a fast transform method for two groups of transform bases is provided.
While the present invention has been particularly shown and described with reference to exemplary embodiments thereof, it will be understood by those of ordinary skill in the art that various changes in form and details may be made therein without departing from the scope of the present invention as defined by the following claims. The exemplary embodiments should be considered in descriptive sense only and not for purposes of limitation. Therefore, the scope of the invention is defined not by the detailed description of the invention but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An integer transform matrix selection method in video coding, the method comprising:

searching for all integer transform bases satisfying an orthogonal condition in a predetermined range, wherein a transform base is defined as (k1, k2, k3, k4) for an 8x8 transform matrix P, wherein

$$P = \begin{pmatrix} 1 & 1 & 1 & 1 & 1 & 1 & 1 & 1 \\ k1 & k2 & k3 & k4 & -k4 & -k3 & -k2 & -k1 \\ 2 & 1 & -1 & -2 & -2 & -1 & 1 & 2 \\ k2 & -k4 & -k1 & -k3 & k3 & k1 & k4 & -k2 \\ 1 & -1 & -1 & 1 & 1 & -1 & -1 & 1 \\ k3 & -k1 & k4 & k2 & -k2 & -k4 & k1 & -k3 \\ 1 & -2 & 2 & -1 & -1 & 2 & -2 & 1 \\ k4 & -k3 & k2 & -k1 & k1 & -k2 & k3 & -k4 \end{pmatrix}$$

where value ranges of transform base coefficients k1, k2, k3, k4 are k1, k2, k3 $\in$ [1,10] and k4 $\in$ [1,4] and all the integer transform bases satisfying $P \cdot P^T = Diag$ are obtained in which Diag is a diagonal matrix;

establishing a covariance matrix COV($X_v$) of input image residual error data when values of a correlation coefficient $\rho$ are at 0.75, 0.8, 0.85, 0.9, and 0.95, where a one dimensional image prediction residual error vector having a length of eight is $X_v = [ x_1, x_2, ...x_8 ]$, the covariance matrix COV($X_v$) of element $X_v$ established based on a first order Markov model is COV($X_v$)$_{(i,j)} = \rho^{|i-j|}$ (0$\leq$i, j$\leq$7), in which the correlation coefficient $\rho$ is a correlation coefficient between adjacent $X_v$ elements, and the correlation coefficient $\rho \leq 1$;

obtaining a covariance matrix COV($Y_v$) of a transform domain through the transform matrix P corresponding to the transform bases, wherein the transform matrix P to which the transform base (k1 , k2 , k3 , k4) corresponds is normalized by dividing each row of the transform matrix P by the vector length of that row, in order to obtain an orthogonal matrix $P_u$, and $X_v$ is orthogonally transformed as $Y_v = P_u X_v$ and a covariance matrix of $Y_v$ is defined as:

$$COV(Y_v) = P_u \cdot COV(X_v) \cdot P_u^{T} ;$$

through the establishing of the covariance matrix COV($X_v$) and the obtaining of the covariance matrix COV ($Y_v$), calculating an energy concentration efficiency $\eta_E$ and a de-correlation efficiency $\eta_c$ when values of the correlation coefficient $\rho$ are 0.75, 0.8, 0.85, 0.9, and 0.95, wherein the energy concentration efficiency $\eta_E$ is defined as:

$$\eta_E = \frac{1}{\sqrt[8]{\prod_{i=1}^{8} COV(Y_v)_{(i,i)}}}$$

and the de-correlation efficiency $\eta_c$ is defined as :

$$\eta_c = 1 - \frac{\sum_{j \neq k} |COV(Y_v)_{(j,k)}|}{\sum_{j \neq k} |COV(X_v)_{(j,k)}|} ;$$

calculating normalized results of energy concentration efficiency $\eta_E$ and de-correlation efficiency $\eta_c$ for each transform base at a predetermined value of the correlation coefficient $\rho$, wherein the normalized result of $\eta_E$ for an i-th transform base at the same value of the correlation coefficient $\rho$ is defined as:

$$Eval_{E(i)} = \frac{\eta_{E(i)} - Min(\eta_{E(j)})}{Max(\eta_{E(j)}) - Min(\eta_{E(j)})}$$

and the normalized result of $\eta_c$ for the ith transform base is defined as:

$$Eval_{c(i)} = \frac{\eta_{c(i)} - Min(\eta_{c(j)})}{Max(\eta_{c(j)}) - Min(\eta_{c(j)})};$$

calculating a weighted sum in order to obtain compositive evaluation values $Eval_E$, and $Eval_c$ of the energy concentration efficiency $\eta_E$ and the de-correlation efficiency $\eta_c$, respectively, for every group of bases at each correlation coefficient p,
wherein weights corresponding to the values of 0.75, 0.8, 0.85, 0.9 and 0.95 of the correlation coefficient $\rho$ are 1/15, 2/15, 3/15, 4/15, and 5/15, respectively; and
calculating the weighted sum of the compositive evaluation values $Eval_c$ and $Eval_E$ in order to obtain a compositive evaluation value Eval for a transform base performance, wherein the weights of the compositive evaluation values $Eval_c$ and $Eval_E$ are 0.4 and 0.6, respectively.

2. The method of claim 1, further comprising after obtaining the compositive evaluation Eval value for the transform base performance:

   evaluating a computation complexity for the transform base (k1, k2 , k3 , k4) , wherein the transform bases with higher compositive evaluation values Eval are selected; and if the difference among the compositive evaluation values Eval is less than 0.02, the transform bases that require fewer additions or subtractions and fewer shifting operations are selected for applications that require better real-time performance.

3. An integer transform method in video coding, wherein at an encoding side, through intra-frame or inter-frame encoding, a prediction residual error of a block is obtained and prediction and block transform is performed so that energy is concentrated on a plurality of coefficients; then through quantization, scanning, run length coding, and entropy coding, video data is compressed and written to a coding bit stream; and at a decoding side, block transform coefficients of entropy coding are extracted from the bit stream, then through inverse quantization and inverse transform, the prediction residual error of the block is reconstructed, which along with prediction information is used to reconstruct the video data, the method comprising:

   obtaining the transform matrix P used in an 8x8 integer transform in video coding through the integer transform matrix selection method in video coding as claimed in claim 1, as the following expression:

$$P = \begin{pmatrix} 1 & 1 & 1 & 1 & 1 & 1 & 1 & 1 \\ 5 & 6 & 4 & 1 & -1 & -4 & -6 & -5 \\ 2 & 1 & -1 & -2 & -2 & -1 & 1 & 2 \\ 6 & -1 & -5 & -4 & 4 & 5 & 1 & -6 \\ 1 & -1 & -1 & 1 & 1 & -1 & -1 & 1 \\ 4 & -5 & 1 & 6 & -6 & -1 & 5 & -4 \\ 1 & -2 & 2 & -1 & -1 & 2 & -2 & 1 \\ 1 & -4 & 6 & -5 & 5 & -6 & 4 & -1 \end{pmatrix}$$

wherein a corresponding integer transform base is (5, 6, 4, 1);

performing an integer transform on an 8x8 image residual error data block, expressed as $Y = PXP^T$, wherein a basic transform unit is an 8-point one dimensional transform, expressed as $y=Px$, where $x = [x0,x1,x2,x3,x4,x5,x6,x7]^T$ and an output vector $y = [y0,y1,y2,y3,y4,y5,y6,y7]^T$, and calculation operations comprise:

A. a0=x0-x7, a1=x1-x6, a2=x2-x5, a3=x3-x4, a4=x0+x7, a5=x1+x6, a6=x2+x5, a7=x3+x4;

B. b0=a4+a7, b1=a5+a6, b2=a4-a7, b3=a5-a6;

C. y0=b0+b1, y4=b0-b1, y2=b2<<1+b3, y6=b2-b3<<1; and then, a calculation expressed as the following equation is performed:

$$\begin{pmatrix} y1 \\ y3 \\ y5 \\ y7 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} a0 \\ a1 \\ a2 \\ a3 \end{pmatrix},$$

D . c0=a0<<2+a0+a3; c1=a2-a1-a1<<2; c2=a1+a2+a2<<2; c3=a3<<2+a3-a0;E. y1=c0-c1+c2; y3=c0-c2-c3; y5=c0+c1+c3; y7=c1+c2-c3;

performing one dimensional inverse transform by defining a basic unit of one dimensional transform as $x=P^Ty$, in which, $y=[y0,y1,y2,y3,y4,y5,y6,y7]^T$, $x=[x0,x1,x2,x3,x4,x5,x6,x7]^T$, wherein performing the one dimensional inverse transform comprises:

A . m0=y0+y4; m1=y0-y4; m2=y2<<1+y6; m3=y2-y6<<1;

B. b0=m0+m2; b1=m1+m3; b2=m1-m3; b3=m0-m2;

C. calculating the 4x4 matrix multiplication expressed as the following equation:

$$\begin{pmatrix} a0 \\ a1 \\ a2 \\ a3 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} y1 \\ y3 \\ y5 \\ y7 \end{pmatrix}$$

where the calculation procedure is the same as that of the 4x4 matrix multiplication in the transform and only input and output vectors are exchanged;

D. x0=a0+b0; x1=a1+b1; x2=a2+b2; x3=a3+b3;

x7=-a0+b0; x6=-a1+b1; x5=-a2+b2; x4=-a3+b3;

where "<<" indicates a left shifting operation, and has a priority higher than that of an addition or subtraction operation, that is, "a<<b" indicates that a is left shifted by b bits.

4. An integer transform method in video coding, wherein at an encoding side, through intra-frame or inter-frame, a prediction residual error of a block is obtained and prediction and block transform is performed so that energy is concentrated on a plurality of block transform coefficients; then through quantization, scanning, run length coding, and entropy coding, video data is compressed and written to a coding bit stream; and at a decoding side, block transform coefficients of entropy coding are extracted from the bit stream, then through inverse quantization and inverse transform, the prediction residual error of the block is reconstructed, which along with prediction information is used to reconstruct the video data, the method comprising:

obtaining the transform matrix P used in an 8x8 integer transform in video coding through the integer transform matrix selection method in video coding as claimed in claim 1, as the following expression:

$$
P=\begin{pmatrix}
1 & 1 & 1 & 1 & 1 & 1 & 1 & 1 \\
4 & 5 & 3 & 1 & -1 & -3 & -5 & -4 \\
2 & 1 & -1 & -2 & -2 & -1 & 1 & 2 \\
5 & -1 & -4 & -3 & 3 & 4 & 1 & -5 \\
1 & -1 & -1 & 1 & 1 & -1 & -1 & 1 \\
3 & -4 & 1 & 5 & -5 & -1 & 4 & -3 \\
1 & -2 & 2 & -1 & -1 & 2 & -2 & 1 \\
1 & -3 & 5 & -4 & 4 & -5 & 3 & -1
\end{pmatrix}
$$

wherein a corresponding integer transform base is (4, 5, 3, 1);
performing an integer transform on an 8x8 image residual error data block, expressed as $Y = PXP^T$, wherein a basic transform unit is an 8-point one dimensional transform, expressed as $y=Px$, where $x= [x0,x1,x2,x3,x4,x5,x6,x7]^T$ and the output vector $y= [y0, y1, y2, y3, y4 , y5, y6, y7]^T$, and the calculation operations comprise:

A. a0=x0-x7, a1=x1-x6, a2=x2-x5, a3=x3-x4, a4=x0+x7, a5=x1+x6, a6=x2+x5, a7=x3+x4;
B. b0=a4+a7, b1=a5+a6, b2=a4-a7, b3=a5-a6;
C. y0=b0+b1, y4=b0-b1, y2=b2<<1+b3, y6=b2-b3<<1; and then, a calculation expressed as the following equation is performed:

$$
\begin{pmatrix}
y1 \\ y3 \\ y5 \\ y7
\end{pmatrix}
=
\begin{pmatrix}
k1 & k2 & k3 & k4 \\
k2 & -k4 & -k1 & -k3 \\
k3 & -k1 & k4 & k2 \\
k4 & -k3 & k2 & -k1
\end{pmatrix}
\begin{pmatrix}
a0 \\ a1 \\ a2 \\ a3
\end{pmatrix}
,
$$

D. c0=a0<<2+a3; c1=a2-a1<<2; c2=a1+a2<<2; c3=a3<<2-a0;
E. y1=c0-c1+c2; y3=c0-c2-c3; y5=c0+c1+c3; y7=c1+c2-c3;

performing one dimensional inverse transform by defining a basic unit of one dimensional transform as $x=P^Ty$, in which, $y =[y0,y1,y2,y3,y4,y5,y6,y7]^T$, $x =[x0,x1,x2,x3,x4,x5,x6,x7]^T$, wherein performing the one dimensional inverse transform comprises:

A . m0=y0+y4; m1=y0-y4; m2=y2<<1+y6; m3=y2-y6<<1;

B . b0=m0+m2; b1=m1+m3; b2=m1-m3; b3=m0-m2;

C . calculating the 4x4 matrix multiplication expressed as the following equation:

$$\begin{pmatrix} a0 \\ a1 \\ a2 \\ a3 \end{pmatrix} = \begin{pmatrix} k1 & k2 & k3 & k4 \\ k2 & -k4 & -k1 & -k3 \\ k3 & -k1 & k4 & k2 \\ k4 & -k3 & k2 & -k1 \end{pmatrix} \begin{pmatrix} y1 \\ y3 \\ y5 \\ y7 \end{pmatrix}$$

where the calculation procedure is the same as that of the 4x4 matrix multiplication in the transform and only input and output vectors are exchanged;

D. x0=a0+b0; x1=a1+b1; x2=a2+b2; x3=a3+b3;
x7=-a0+b0; x6=-a1+b1; x5=-a2+b2; x4=-a3+b3;

where "<<" indicates a left shifting operation, and has a priority higher than that of an addition or subtraction operation, that is, "a<<b" indicates a is left shifted by b bits.

**5.** An integer transform matrix selection method in video coding, the method comprising:

searching for integer transform bases satisfying an orthogonal condition in a predetermined range, wherein a transform base is defined as (k1, k2 , k3 , k4) for an 8x8 transform matrix P, wherein

$$P = \begin{pmatrix} 1 & 1 & 1 & 1 & 1 & 1 & 1 & 1 \\ k1 & k2 & k3 & k4 & -k4 & -k3 & -k2 & -k1 \\ 2 & 1 & -1 & -2 & -2 & -1 & 1 & 2 \\ k2 & -k4 & -k1 & -k3 & k3 & k1 & k4 & -k2 \\ 1 & -1 & -1 & 1 & 1 & -1 & -1 & 1 \\ k3 & -k1 & k4 & k2 & -k2 & -k4 & k1 & -k3 \\ 1 & -2 & 2 & -1 & -1 & 2 & -2 & 1 \\ k4 & -k3 & k2 & -k1 & k1 & -k2 & k3 & -k4 \end{pmatrix};$$

setting correlation coefficients $\rho$ of a variety of image residual error data;
calculating an energy concentration efficiency $\eta_E$ and a de-correlation efficiency $\eta_c$ for the set correlation coefficients $\rho$;
calculating a normalized result of the energy concentration efficiency $\eta_E$ and the de-correlation efficiency $\eta_c$ for each transform base at predetermined values of the correlation coefficients p; and
calculating a weighted sum in order to obtain compositive evaluation values $Eval_E$ and $Eval_c$ of the normalized energy concentration efficiency $\eta_E$ and de-correlation efficiency $\eta_c$, respectively, for the transform base at the correlation coefficients p.

**6.** The method of claim 5, wherein the calculating of the energy concentration efficiency $\eta_E$ and the de-correlation efficiency $\eta_c$ for the set correlation coefficients $\rho$ further comprises:

calculating a covariance matrix COV(Xv) of input image residual error data for the predetermined correlation coefficient $\rho$;
calculating an orthogonal transform matrix Pu for the transform base; and
calculating a covariance matrix COV(Yv) of a transform domain through the transform matrix P corresponding to the transform matrix P.

7. The method of claim 6, wherein the covariance matrix COV(Xv) is $COV(X_v)_{(i,j)} = \rho^{|i-j|}$ ($0 \leq i, j \leq 7$); $X_v = [x_1, x_2, ...x_8]$; a correlation coefficient $\rho$ of element $X_v$ established based on a first order Markov model is a correlation coefficient between adjacent $X_v$ elements, and $\rho \leq 1$; the covariance matrix COV(Yv) is $COV(Y_v) = P_u \cdot COV(X_v) \cdot P_u^T$; the transform matrix P corresponding to transform base (k1, k2, k3, k4) is normalized by dividing each row of P by a vector length of a row, in order to obtain orthogonal matrix $P_u$; $X_v$ is orthogonally transformed as $Y_v = P_u X_v$; and the energy concentration efficiency $\eta_E$ and the de-correlation efficiency $\eta_c$ are defined as the following equations, respectively:

$$\eta_E = \frac{1}{\sqrt[8]{\prod_{i=1}^{8} COV(Y_v)_{(i,i)}}} \, , \quad \eta_c = 1 - \frac{\sum_{j \neq k} |COV(Y_v)_{(j,k)}|}{\sum_{j \neq k} |COV(X_v)_{(j,k)}|} \, .$$

8. The method of any one of claims 5 to 7, further comprising:

calculating a weighted sum of the compositive evaluation values $Eval_c$ and $Eval_E$ in order to obtain a compositive evaluation value Eval for a transform base performance.

9. The method of claim 8, wherein weights of the compositive evaluation values $Eval_c$ and $Eval_E$ are 0.4 and 0.6, respectively.

10. The method of claim 8 or claim 9, further comprising:

evaluating a computation complexity for the transform base.

11. The method of claim 10, wherein a transform base with a higher compositive evaluation value Eval for the transform base performance is selected, and if the difference of Eval values is less than a predetermined value, a transform base with an advantageous computation complexity is selected.

12. The method of any one of claims 5 to 11, wherein a range of the transform base coefficient values is k1, k2, k3 $\in$ [1,10] and k4 $\in$ [1,4] and all the integer transform bases satisfying $P \cdot P^T = Diag$ are obtained in which *Diag* is a diagonal matrix.

13. The method of any one of claims 5 to 12, wherein the values of correlation coefficient $\rho$ are set at 0.75, 0.8, 0.85, 0.9, and 0.95.

14. The method of claim 13, wherein in the calculating of the weighted sum, the weights corresponding to the values of 0.75, 0.8, 0.85, 0.9 and 0.95 of the correlation coefficients $\rho$ are 1/15, 2/15, 3/15, 4/15, and 5/15, respectively.

15. An integer transform method in video coding, the method comprising:

obtaining the transform matrix P used in an 8x8 integer transform in video coding through the integer transform matrix selection method in video coding as claimed in claim 5;
performing an integer transform on an 8x8 image residual error data block, expressed as $Y = PXP^T$, wherein a basic transform unit is an 8-point one dimensional transform, expressed as y=Px, where x= $[x0,x1,x2,x3,x4,x5,x6,x7]^T$ and the output vector y=$[y0,y1,y2,y3,y4,y5,y6,y7]^T$; and
performing one dimensional inverse transform by defining a basic unit of one dimensional transform as x=$P^T$y, in which, y=$[y0,y1,y2,y3,y4,y5,y6,y7]^T$, and x =$[x0,x1,x2,x3,x4,x5,x6,x7]^T$.

EP 1 577 790 A2

## FIG. 1

START

**S1** SET VALUE RANGE OF k1, k2, k3, k4 IN TRANSFORM BASE

**S2** SELECT ALL TRANSFORM BASES SATISFYING ORTHOGONALITY IN SET RANGE

**S3** SET INPUT DATA CORRELATION COEFFICIENT $\rho$ AT 0.75, 0.8, 0.85, 0.9 AND 0.95

NEXT BASE

NEXT BASE

**S4** CALCULATE COVARIANCE MATRIX COV(X) OF INPUT ONE-DIMENSIONAL DATA FOR PREDETERMINED $\rho$

**S5** CALCULATE ORTHOGONAL TRANSFORM MATRIX Pu FOR TRANSFORM BASE

**S6** CALCULATE OUTPUT ONE-DIMENSIONAL DATA OUTPUT COVARIANCE MATRIX COV(Y)

**S7** CALCULATE DE-CORRELATION EFFICIENCY $\eta_C$ AND ENERGY CONCENTRATION EFFICIENCY $\eta_E$

**S8** IS THIS LAST TRANSFORM BASE? — NO

YES

**S9** NORMALIZE DE-CORRELATION EFFICIENCY $\eta_C$ AND ENERGY CONCENTRATION EFFICIENCY $\eta_E$ OF ALL TRANSFORM BASES FOR PREDETERMINED $\rho$

**S10** IS THIS LAST TRANSFORM BASE? — NO

YES

NEXT BASE

**S11** CALCULATE WEIGHTED SUM OF NORMALIZED $\eta_C$ OF TRANSFORM BASE AT 5 VALUES IN ORDER TO OBTAIN COMPOSITIVE EVALUATION RESULT Eval$_C$

**S12** CALCULATE WEIGHTED SUM OF NORMALIZED $\eta_E$ OF TRANSFORM BASE AT 5 $\rho$ VALUES IN ORDER TO OBTAIN COMPOSITIVE EVALUATION RESULT Eval$_E$

**S13** IS THE LAST TRANSFORM BASE? — NO

YES

NEXT BASE

**S14** CALCULATE WEIGHTED SUM OF Eval$_C$ AND Eval$_E$ BY USING 0.4 AND 0.6 AS WEIGHTS OF Eval$_C$ AND EvalE, RESPECTIVELY, IN ORDER TO OBTAIN COMPOSITIVE EVALUATION VALUE (Eval) FOR TRANSFORM BASE PERFORMANCE

**S15** IS THE LAST TRANSFORM BASE? — NO

YES

END

18

FIG. 2

FIG. 3

FIG. 4

FIG. 5